# EUROPEAN PATENT APPLICATION

(11) **EP 1 419 869 A1**
(43) Date of publication of application: **19.05.2004**
(21) Application number: 02711263.0
(22) Date of filing: 31.01.2002
(51) Int. Cl.: B29C 45/28, B29C 45/26, B29C 45/38

(54) **METHOD OF MANUFACTURING MOLDED PRODUCT AND VALVE GATE TYPE METAL MOLD DEVICE**

(30) Priority: 27.06.2001 JP 2001195431
(71) Applicant: MITSUBISHI MATERIALS CORPORATION, Chiyoda-ku, Tokyo 100-8117 (JP)
(72) Inventor: TAKEDA, Yoshinobu, c/o Mitsubishi Materials Corp., Niigata-shi, Niigata 950-8640 (JP)
(74) Representative: HOFFMANN - EITLE
(86) International application number: PCT/JP2002/000778
(87) International publication number: WO 2003/002326

(57) **Abstract**

A valve sleeve 56 which opens and closes a gate 35 is provided on a stationary mold 21. When the mold is closed, a core pin 81 provided on a movable mold 22 engages into the valve sleeve 56. Consequently, a cylindrical gate 35 which opens into a product cavity 23 at a position corresponding with the periphery of a hole of a molded product is formed. The engagement between the core pin 81 and the valve sleeve 56 prevents core deviation of the valve sleeve 56 by resisting resin pressure and the like. As a result, when manufacturing a molded product with a hole, the product cavity can be filled evenly with the molding material, and a highly precise and high quality molded product can be obtained.

## Description

### TECHNICAL FIELD

The present invention relates to a method of manufacturing a molded product with a hole and a valve gate molding apparatus used in this method, which is used specifically in the injection molding of thermoplastic resins, and the like.

### BACKGROUND ART

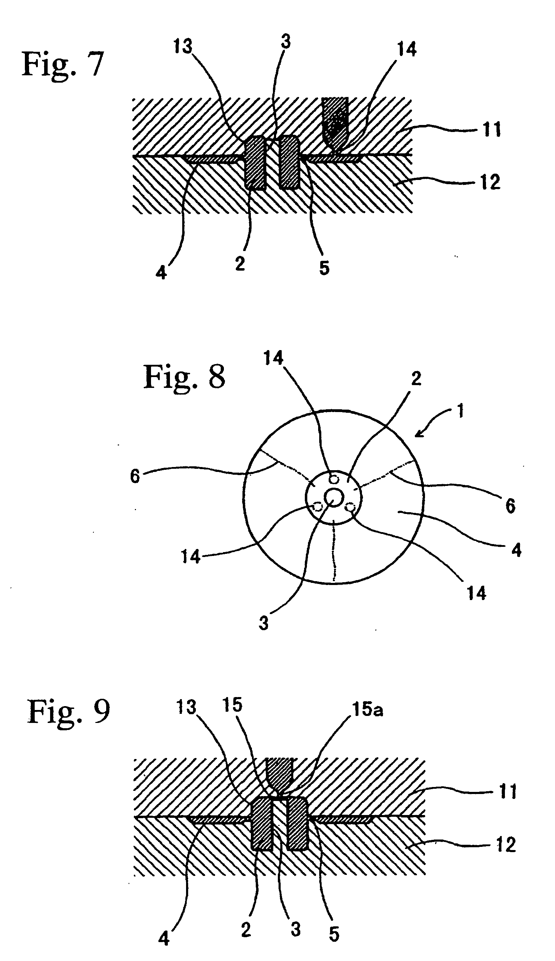

FIG. 6A and FIG. 6B show an example of a molded product 1, which is a manufactured product formed as an integrated unit from a thermoplastic resin molding material. This molded product 1 has a rotation symmetry, and comprises a circular cylinder shaped cylinder section 2 at its center which is termed a boss, and a hole 3 which is formed in this cylinder section 2. A disc section 4 is formed at the outer periphery of the cylinder section 2, and the inner periphery of this disc section 4 which links to the cylinder section 2 is formed as a thin walled section 5.

Generally, when molding such a molded product 1, a molding apparatus such as that shown in FIG. 7 is used, comprising a stationary mold 11 and a movable mold 12 which can open and close with respect to each other. In this apparatus, the stationary mold 11 and the movable mold 12 are closed to form a product cavity 13 between this stationary mold 11 and movable mold 12, and molten resin is then injected into the product cavity 13 via a gate 14 provided in the stationary mold 11, and then solidified.

In the case of the molded product 1, which as described above has a rotation symmetry, in order to evenly fill the product cavity 13 with the resin, the gate 14 is preferably provided at a position corresponding with the center axis of the molded product 1, that is the center axis of the product cavity 13. However, in the molded product 1, since the hole 3 is provided at the center axis, providing the gate 14 over the center axis of the product cavity 13 is difficult.

Accordingly, although conventionally the gate 14 was provided in a position corresponding with the disc section 4 or a position corresponding with the cylinder section 2, as shown in FIG. 7, in either of these positions the hole 3 obstructs the flow of the resin, and consequently insufficient filling tends to occur in sections of the product cavity 13 on the opposite side to the gate 14 relative to the hole 3, making it difficult to evenly fill the entire space within the product cavity 13 with resin.

If the product cavity is not filled evenly with resin, problems arise such as a reduction in dimensional precision including the roundness, and irregular density.

For example, in the case of a product like a turntable, if sufficient precision is not ensured, problems such as rotational unevenness can occur. Specifically, when the gate 14 is provided at a position corresponding with the disc section 4, if a thin walled section 5 such as that of the aforementioned molded product 1 exists between the disc section 4 and the cylinder section 2, then inadequate filling of the cylinder section 2 is more likely to occur.

Consequently, a plurality of gates 14 are sometimes provided in a plurality of evenly spaced locations around the center axis of the molded product 1, or in other words the product cavity 13, as shown in FIG. 8.

However, even if a plurality of gates 14 are provided in this manner, it is still difficult to fill the entire product cavity 13 with the resin in a sufficiently even manner. Moreover, when there are a plurality of gates 14, an additional problem occurs in that weld lines 6 tend to appear where the flows of resin injected via these gates 14 merge. These weld lines 6 can cause problems such as partial weakening of the strength of the molded product 1 at the locations of the weld lines.

A film shaped disk gate 15 can also be used instead of the pin point gate 14 shown in FIG. 7 and FIG. 8. This disk gate 15 opens at a position corresponding with one end of the inner periphery of the cylinder section 2 in the product cavity 13, centered about a pin point section 15a which is located above the center axis of the product cavity 13.

By using such a disk gate 15, it is possible to evenly fill the product cavity 13 with resin, but the disk gate 15 must be a so called "cold type", and an impression of the gate in the shape of a thin film which fills the opening of the disk gate 15 is left at one end of the cylinder section 2 in the molded product 1. This film shaped gate impression must be removed by after treatment, which leads to an increase in production time.

The present invention takes the above problems into consideration, with an object of providing a method of manufacturing a molded product and a valve gate molding apparatus in which the product cavity can be filled evenly with a molding material when manufacturing a molded product with a hole, thereby obtaining a highly precise and high quality molded product, and in which after treatment of the gate portion is not required.

### DISCLOSURE OF INVENTION

A first embodiment of the present invention is a method of manufacturing a molded product with a hole, wherein a plurality of molds capable of opening and closing with respect to each other are closed to form a product cavity between the molds, and a core body, provided on a mold which opposes a mold with a gate forming hole which opens at a position in a product cavity corresponding to the hole, engages with an inner peripheral surface of a cylindrical valve body provided on the mold with the gate forming hole, thereby forming a cylindrical gate between the inner peripheral surface of the gate forming hole and an outer peripheral surface of the core body, this gate is opened by moving a valve body which closes the gate in an axial direction, and a molding material is then injected into the product cavity via the gate, which is opened in a state in which the core body remains engaged in the valve body.

Because the gate is cylindrical as described above, and this cylindrical gate opens into the product cavity at a position corresponding with the periphery of the hole of the molded product, the molding material injected into the product cavity via the gate spreads radially outward from the position corresponding with the periphery of the hole. Consequently, the flow is not obstructed by the hole, allowing the inside of the product cavity to be filled evenly.

In addition, when filling the product cavity with the molding material via the gate, because the core body provided on the mold which opposes the mold on which the valve body is provided engages directly with the inner peripheral surface of the cylindrical valve body, core deviation of the valve body which forms the gate, caused by the pressure of the molding material or the like, is prevented. Consequently, the thickness of the cylindrical gate is kept stable around the entire periphery, and accordingly, the molding material fills each section of the product cavity even more evenly.

Furthermore, after the product cavity is filled with the molding material, the valve body is moved to close the gate, and as a result, the molding material within the product cavity, or in other words the molded product of the finished product, and the molding material within a material passage ending at the gate are cut off from each other. Accordingly, after treatment of the gate portion in the molded product is unnecessary.

A construction may also be used in which a material passage which connects to the gate forming hole is provided in the mold with the gate forming hole, and the outer peripheral surface on the gate side of the valve body is supported in a freely sliding manner by a valve pin support section provided in this material passage.

In this case, even if pressure is applied to the valve body by the molding material in the material passage, reliable core alignment is achieved between the valve body, and the core body and the gate. Accordingly, reliable operation of the valve body is ensured. and abrasion between the valve body, the core body and the gate is suppressed.

A second embodiment of the present invention is a valve gate molding apparatus for molding a molded product with a hole. This apparatus comprises a plurality of molds which are capable of opening and closing with respect to each other and which form a product cavity therebetween when closed; a cylindrical valve body which is provided on a mold amongst these molds with a gate forming hole which opens at a position corresponding with a hole in the product cavity, and which moves in the axial direction of the gate forming hole, so as to engage with this gate forming hole in a freely removable manner; and a core body provided on the mold which opposes the mold with the gate forming hole, which is constantly engaged with the inner peripheral surface of the cylindrical valve body in a freely sliding manner when the molds are closed. A cylindrical gate through which the molding material is injected into the product cavity is formed between the inner peripheral surface of the gate forming hole and the outer peripheral surface of the core body. By using this valve gate molding apparatus, the manufacturing method described above can be realized.

A construction may also be used in which a material passage which links to the gate forming hole is provided in the mold comprising the gate forming hole, the valve body is positioned within this material passage, and the material passage comprises a valve pin support section which supports the gate side outer peripheral surface of the valve body in a freely sliding manner.

In this case, even if pressure is applied to the valve body by the molding material in the material passage, reliable core alignment is achieved between the valve body, and the core body and the gate. Accordingly, reliable operation of the valve body is ensured, and abrasion between the valve body, the core body and the gate is suppressed.

The mold which comprises the core body may also comprise a cavity forming member which forms the product cavity, a mounting plate, and an ejector plate provided between the mounting plate and the cavity forming member. An ejector sleeve which pushes the molded product at the periphery of the hole to release the molded product from the mold may be fixed to this ejector plate, and the core body may be fixed at one end to the mounting plate, and may pass through the ejector plate and the ejector sleeve in a freely sliding manner and protrude into the product cavity.

Once the molding material which fills the product cavity, or in other words the molded product, has solidified, the mold is opened and the molded product is removed, and at this time, the ejector sleeve which moves together with the ejector plate pushes the molded product at the periphery of the hole to release the molded product from the mold. Since the ejector sleeve pushes the molded product at the periphery of the hole in this manner, the core body is positioned within the ejector sleeve, but since the core body also passes through the ejector plate to which the ejector sleeve is fixed, and is fixed to the mounting plate positioned on the opposite side to the cavity forming member, so as to sandwich this ejector plate, it is possible to operate the ejector sleeve independently of the core body. This ability to operate the ejector sleeve independently of the core body is required so that the core body can be extracted from the molded product when the molded product is released from the mold.

### BRIEF DESCRIPTION OF THE DRAWINGS

FIG. 1 is a cross-sectional view showing an embodiment of a valve gate molding apparatus of the present invention, showing a state in which the gate is closed.
FIG. 2 is a cross-sectional view showing the same embodiment with the gate open.
FIG. 3 is an enlarged cross-sectional view showing the surroundings of a valve body support section.
FIG. 4 is a cross-sectional view along the line A-A in FIG. 3.
FIG. 5 is a cross-sectional view showing the removal of the molded product from the mold.
FIG. 6 A and FIG. 6B are a cross-sectional view and a bottom view respectively of an example of a molded product.
FIG. 7 is a cross-sectional view showing an example of a conventional molding apparatus.
FIG. 8 is a plan view showing another example of a conventional molding apparatus.
FIG. 9 is a cross-sectional view showing yet another example of a conventional molding apparatus.

### BEST MODE FOR CARRYING OUT THE INVENTION

As follows is a description of the preferred embodiments of the present invention with reference to the drawings. However, the present invention is not limited to the embodiments below, and the present invention may be combined with conventionally known constructions.

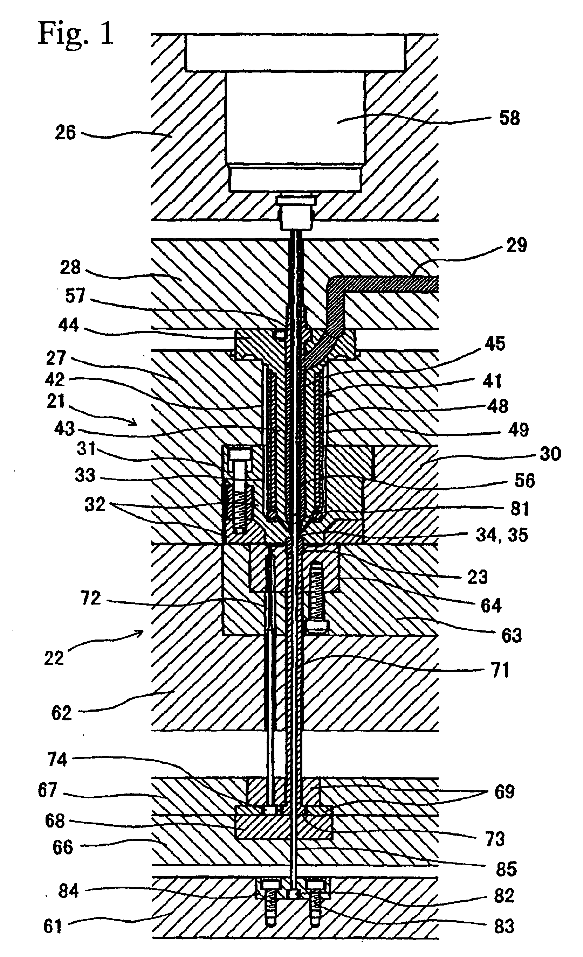

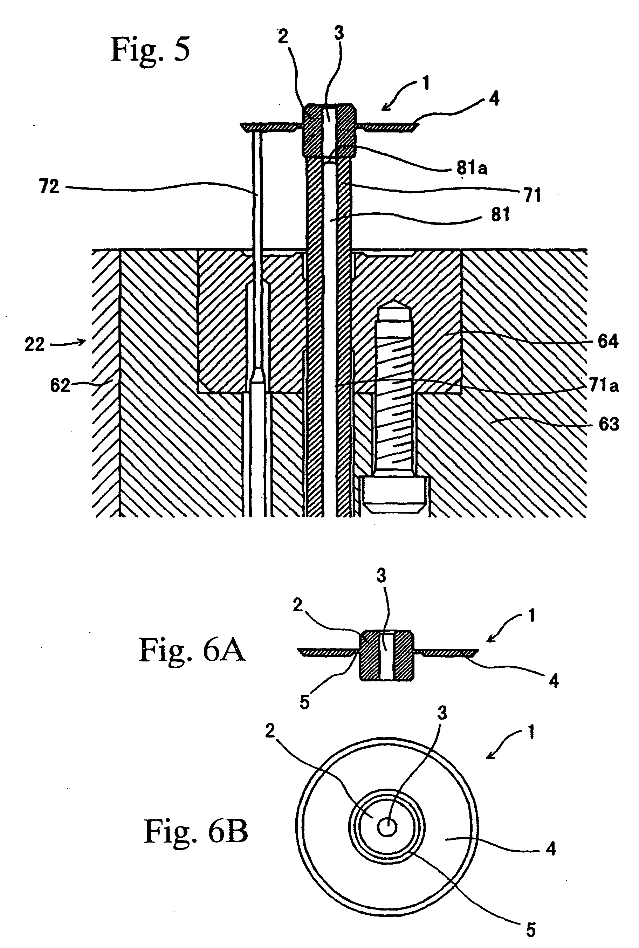

FIG. 1 through FIG. 5 show an embodiment of a method of manufacturing a molded product of the present invention and a valve gate molding apparatus used in this method. The molded product manufactured in this embodiment is, for example, the molded product 1 shown in FIG. 6 and described above.

Reference numeral 21 in the figure indicates a stationary mold, and numeral 22 indicates a movable mold, and these molds oppose each other. This stationary mold 21 and movable mold 22 move in the vertical direction (the mold opening and closing direction) as shown in the figures to open and close the mold. When the mold is closed, one or a plurality of product cavities 23 in the shape of the molded product 1 are formed between the molds.

The stationary mold 21 comprises a stationary side mounting plate 26 which is mounted to a stationary side platen of an injection molding device not shown in the figures, and a stationary side mold plate 27 fixed via a spacer block (not shown in the figure) to the lower side of the stationary side mounting plate 26, that is, the surface of the stationary side mounting plate 26 facing the movable mold 22. A manifold 28 is provided between the stationary side mounting plate 26 and the stationary side mold plate 27. A runner 29 which acts as a material passage is formed in the manifold 28. This runner 29 links to a sprue in a sprue bush (not shown in the figures) to which the nozzle of the injection molding device is connected. Although not shown in the figures, a heater which provides heat is provided in the manifold 28. In addition, a cavity block 30 is embedded into the surface of the stationary side mold plate 27 facing the movable mold 22.

A gate bush 32 is fixed by engaging the gate bush 32 in a gate bush insertion hole 31 formed in the surfaces of the stationary side mold plate 27 and the cavity block 30 which face the movable mold 22. An insertion hole 33 is formed which passes through this gate bush 32, and at the front end at the movable mold 22 side of this insertion hole 33 is formed a cylindrical gate forming hole 34 which opens into a product cavity 23 at a position which corresponds with a hole 3 of the molded product 1. The axial direction of this gate forming hole 34 is the same as the mold opening and closing direction.

A valve apparatus 41 which opens and closes a gate 35 formed by the gate forming hole 34 is built into the stationary mold 21.

The construction of this valve apparatus 41 is as follows. An insertion hole 42 is formed through the stationary side mold plate 27 in the mold opening and closing direction, leading to the insertion hole 33 in the gate bush 32. A substantially cylindrical valve main body 43 is integrated into these insertion holes 33, 42. One end of this valve main body 43 is formed as a flange section 44, which is sandwiched and fixed between the manifold 28 and the stationary side mold plate 27.

Inside the valve main body 43 is a material passage 45 which links the runner 29 within the manifold 28 to the gate 35. This material passage 45 is substantially linear along the mold opening and closing direction, with the exception of a portion on the manifold 28 side, and a valve sleeve support section 46 in the form of a valve body support section which is narrower in diameter than the other portions of the material passage 45, is formed at the bottom end in the figure of the material passage 45, that is, the front end at the gate 35 side. In addition, a plurality of recessed grooves 47 which are spaced at equal intervals from each other and pass through the valve sleeve support section 46 in the mold opening and closing direction are formed on the inside surface at the periphery of this valve sleeve support section 46. These recessed grooves 47 link the material passage 45 in the valve main body 43 to the gate 35. A band heater 48 which heats the material passage 45, and a substantially cylindrical heater cover 49 which covers the outside of this heater 48 are attached on the outer peripheral surface of the valve main body 43.

In addition, an insulating seal ring 51 in the form of a short cylinder engages with the outer periphery of the valve main body 43 at a position closer to the gate 35 than the heater cover 49. The outer peripheral surface of this insulating seal ring 51 engages with a cylindrical engagement surface 52 with the same diameter, which is formed in the insertion hole 33 of the gate bush 32. Consequently, the valve main body 43 is supported by the front end of the gate bush 32 on the gate 35 side thereof. In those portions excluding the engagement surface 52 between the insulating seal ring 51 and the gate bush 32, gaps are formed between the inside surfaces of the insertion holes 33, 42 and the outside surface of the valve main body 43 or the heater 49, in order to provide insulation.

A cylindrical valve sleeve 56 in the form of a valve body which moves in the mold opening and closing direction and engages with the gate forming hole 34 in a removable manner is provided through the center axis of the material passage 45 of the valve main body 43. The front end of this valve sleeve 56 on the gate 35 side is constantly engaged with the valve sleeve support section 46 in a freely sliding manner. On the other hand, at the end of the valve main body 43 on the manifold 28 side, the valve sleeve 56 is supported by the guide bush 57 which is fixed inside the valve main body 43. In other words, the valve sleeve 56 passes through the guide bush 57 in a freely sliding manner.

In addition, the valve sleeve 56 passes through the manifold 28, and is driven by a fluid pressure cylinder 58 such as a hydraulic cylinder provided as a driving force on the stationary side mounting plate 26, so as to move in the axial direction. This direction corresponds with the mold opening and closing direction described above.

The movable mold 22 comprises a movable side mounting plate 61 mounted to a movable side platen of the injection molding device not shown in the figures, and a movable side mold plate 62 which acts as a cavity forming member and is fixed via a spacer block (not shown in the figure) to the top section in the diagram of the movable side mounting plate 61, that is, the surface thereof on the stationary mold 21 side. A core block 63 is embedded into the surface of the movable side mold plate 62 which faces the stationary mold 21, and in addition, a core liner 64 is fixed by embedding into the surface of the core block 63 which faces the stationary mold 21, to act as a cavity forming member which forms the product cavity 23.

A pair of ejector plates 66, 67 which are fixed to each other are supported between the movable side mounting plate 61 and the movable side mold plate 62 so as to move freely in the mold opening and closing direction. A pair of ejector member securing plates 68, 69 which are fixed to each other are sandwiched between these ejector plates 66, 67. A cylindrical ejector sleeve 71 which pushes the molded product 1 towards the stationary mold 21 to release the molded product 1 from the movable mold 22, and one end of an ejector pin 72 are fixed to these ejector member securing plates 68, 69.

In further detail, flange sections 73, 74 formed at one end of the ejector sleeve 71 and the ejector pin 72 are sandwiched and fixed by the pair of ejector member securing plates 68, 69. The ejector sleeve 71 and the ejector pin 72 pass through the movable side mold plate 62, the core block 63 and the core liner 64 in a freely sliding manner, such that the front end thereof reaches the product cavity 23. The ejector sleeve 71 pushes the molded product 1 at one end surface of the cylinder section 2 at the periphery of the hole 3, and the ejector pin 72 pushes the molded product 1 at a disc section 4.

In addition, a core pin 81 which acts as the core body which engages in a freely removable manner with the hole 56a in the cylindrical valve sleeve 56 on the stationary mold 21 side is provided in the movable mold 22. This core pin 81 has a long cylindrical shape, with the mold opening and closing direction as its axial direction. A flange section 82 formed at one end of the core pin 81 is sandwiched between the movable side mounting plate 61 and a blocking plate 84 which is fixed to the movable side mounting plate 61 by a bolt 83, thereby fixing the core pin 81 to the movable side mounting plate 61. The core pin 81 passes through a through hole 85 formed in the ejector plate 66 and the ejector member securing plate 68, and a through hole 71a formed in the cylindrical ejector sleeve 71, in a freely sliding manner, and the front end thereof protrudes into the product cavity 23.

In addition, when the stationary mold 21 and the movable mold 22 are closed, the front end of the core pin 81 is constantly engaged in a freely sliding manner with the inner peripheral surface of the hole 56a in the cylindrical valve sleeve 56 on the stationary mold 21 side. In other words, the core pin 81 forms the hole 3 in the molded product 1. In a state in which the core pin 81 is engaged inside the valve sleeve 56, the cylindrical gate 35 through which the molding material is injected into the product cavity is formed between the inner peripheral surface of the gate forming hole 34 on the stationary mold 21 side, and the outer peripheral surface of the core pin 81. The front end surface 81a of the core pin 81 is a hemispherical surface, to allow smooth insertion into the valve sleeve 56.

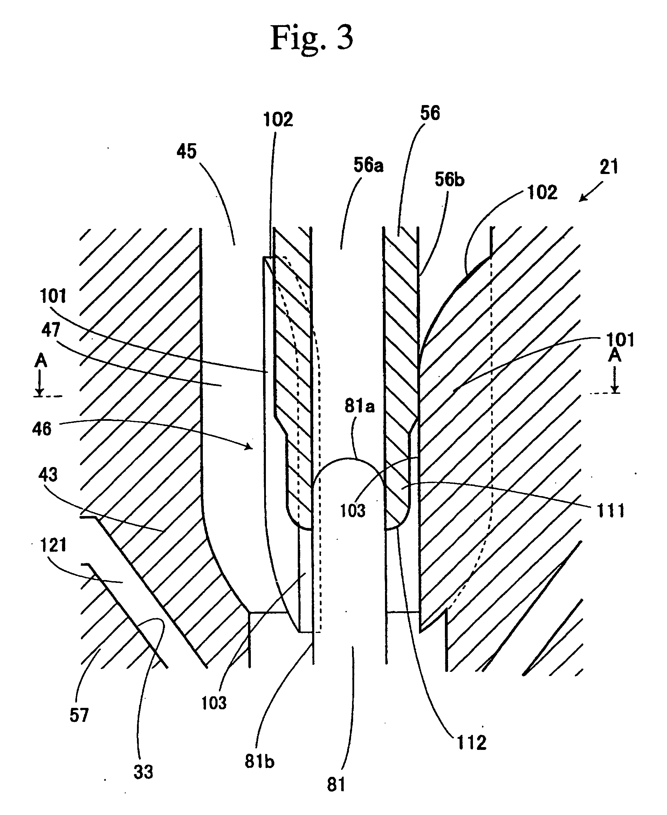

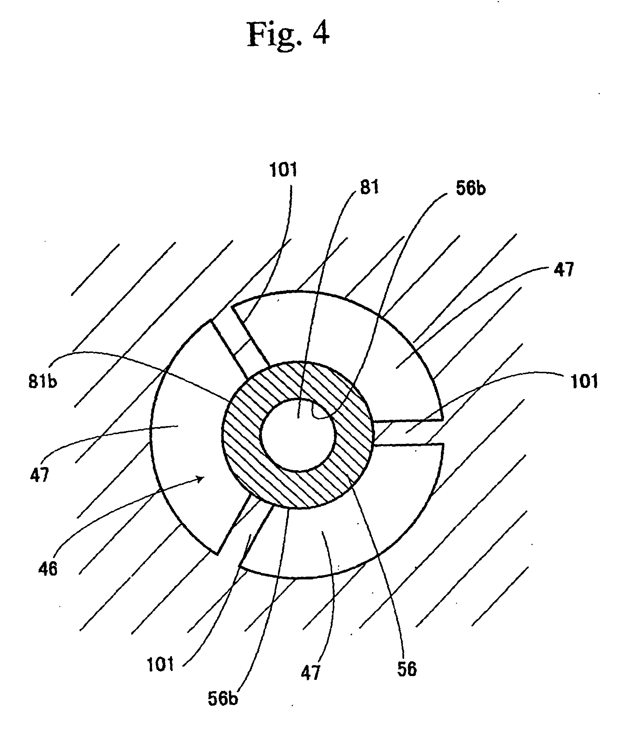

The valve sleeve support section 46 is described below in detail with reference to FIG. 3 and FIG. 4. The valve sleeve support section 46 is formed by integrating three support vanes 101 which extend in the mold opening and closing direction on the inner peripheral surface of the material passage 45 at the gate 35 side, and the space between these support vanes 101 forms the recessed grooves 47. The support vanes 101 are positioned radially about the center axis of the material passage 45 at 120° intervals. The base ends of the inside edges of the support vanes 101, which are the portions away from the gate 35, form convex curved edges 102, and the other edges, which are parallel to the mold opening and closing direction, form sliding edges 103 which slide over the outer peripheral surface 56b of the valve sleeve 56, and the outer peripheral surface 56b of the valve sleeve 56 is supported in a freely sliding manner by the plurality of support vanes 101. The valve main body 43, which comprises the above type of support vanes 101 within a single integrated unit can be manufactured by electric discharge machining, for example.

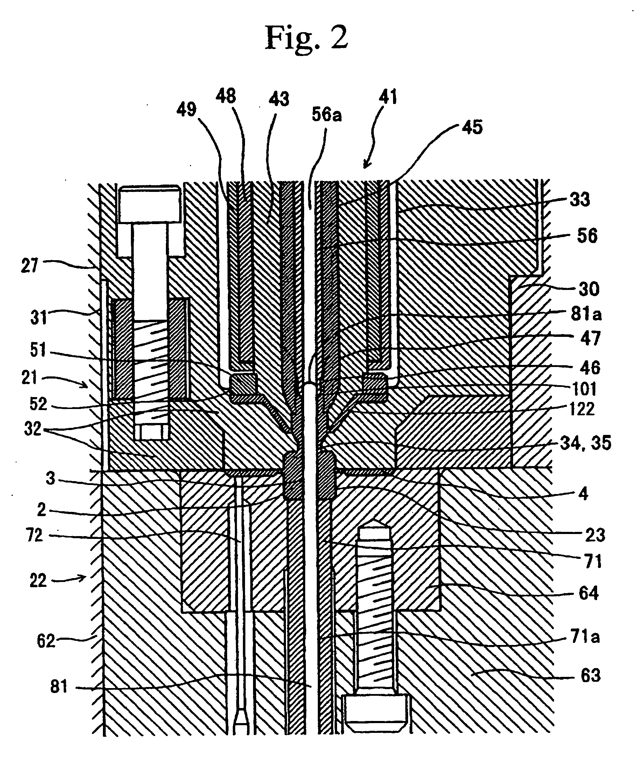

As shown in FIG. 2 and FIG. 3, a gate closing section 111 which engages with the gate 35 in a freely removable manner and opens and closes the gate 35 is provided at the front end at the gate 35 side of the valve sleeve 56, and this gate closing section 111 is formed with a narrower diameter than the base end of the valve sleeve 56, and the corners at the outer periphery of the front end are formed as curved surfaces.

As shown in FIG. 2, a gap 121 is formed at the front end of the insulating seal ring 51, between the inside surface of the insertion hole 33 of the gate bush 32 and the front outside surface of the valve main body 43, and because this gap links to the material passage 45 and the gate 35, the resin which is the molding material enters the gap to form a resin insulating layer 122.

As follows is a description of a method of manufacturing a molded product which utilizes the above described valve gate molding apparatus. To mold the molded product 1, first the stationary mold 21 and the movable mold 22 are closed. In this state, the product cavity 23 is formed between the stationary mold 21 and the movable mold 22, and the core pin 81 on the movable mold 22 side engages inside the valve sleeve 56 on the stationary mold 21 side, thereby forming a cylindrical gate 35 between the inner peripheral surface of the gate forming hole 34 on the stationary mold 21 side and the outer peripheral surface of the core pin 81. In addition, as shown in FIG. 2, the valve sleeve 56 is driven by the fluid pressure cylinder 58 and moves away from the movable mold 22, thereby opening the gate 35. Even in this state, the core pin 81 remains engaged within the valve sleeve 56.

A thermoplastic resin such as molten nylon, which acts as the molding material, is injected into the sprue from a nozzle of an injection molding device not shown in the figures. This resin travels through the sprue to the runner 29 in the manifold 28, the material passage 45 in the valve main body 43, and the concave depressions 47 in the valve sleeve support section 46 of the material passage, and is injected into the product cavity 23 via the gate 35. Once the product cavity 23 is filled with the resin in this manner, and following a pressure maintenance phase, the valve sleeve 56 is driven by the fluid pressure cylinder 58 and moves towards the movable mold 22 and engages with the gate 35, thereby closing the gate 35, as shown in FIG. 1. As a result, the resin in the product cavity 23, that is the molded product 1 which becomes the finished product, and the resin in the material passage 45 ending at the gate 35 are cut off from each other.

In addition, after the resin in the product cavity 23 has cooled and solidified, the stationary mold 21 and the movable mold 22 are opened, and the molded product 1 is removed. At this time, the difference between the mold release resistance of the stationary mold 21 side and the mold release resistance of the movable mold 22 side produced when the stationary mold 21 and the movable mold 22 are opened causes the molded product 1 to first separate from the stationary mold 21. The ejector plates 66, 67 are then pushed towards the stationary mold 21 side by ejector rods (not shown in the figures) provided on the injection molding device. Consequently, as shown in FIG. 3, the ejector sleeve 71 and the ejector pin 72 move towards the stationary mold 21, where the ejector sleeve 71 pushes one end surface of the cylinder section 2 of the molded product 1, and the ejector pin 72 pushes the disc section 4 of the molded product 1, causing the molded product 1 to separate from the stationary mold 21. The ejector sleeve 71 moves until the front end thereof protrudes further towards the stationary mold 21 than the front end of the core pin 81, and consequently, the core pin 81 comes out of the hole 3 in the molded product 1. Namely, the core pin 81 is removed from the valve sleeve 56 with the stationary mold 21 and the movable mold 22 in an open state.

Subsequently, the stationary mold 21 and the movable mold 22 are closed again, and the molding cycle described above is repeated. Throughout the entire molding cycle, the resin in the sprue, the runner 29 of the manifold 28 and the material passage 45 of the valve main body 43 is maintained in a constant molten state by the heating provided by the heater 48.

According to the construction of the embodiment described above, because the gate 35 is cylindrical and this gate 35 opens into the product cavity 23 at a position corresponding with the periphery of the hole 3 of the molded product 1, the resin injected into the product cavity 23 from the gate 35 spreads radially outwards from the position corresponding with the periphery of the hole 3, and the inside of the product cavity 23 is filled evenly without any problems such as the flow being obstructed by the core pin 81, and furthermore weld lines also do not appear. In addition, since the core pin 81 on the movable mold 22 side is engaged within the valve sleeve 56 on the stationary mold 21 side, when filling the product cavity 23 with resin via the gate 35, core deviation between the valve sleeve 56 and the core pin 81 which form the gate 35, caused by factors such as the pressure of the resin, is prevented. As a result, the thickness of the cylindrical gate 35 is kept stable around the entire periphery and resists the pressure of the resin, and accordingly the resin fills each section of the product cavity 23 even more evenly. As a result, a high quality molded product 1 with highly precise roundness and the like can be obtained. If the molded product 1 is a turntable, for example, unevenness during rotation can be prevented.

Because the molded product 1 and the resin in the material passage 45 ending at the gate 35 are cut off from each other in the above molding apparatus, after treatment of the gate 35 portion of the molded product 1 is not required.

In addition, because the ejector sleeve 71 pushes the molded product 1 at the periphery of the hole 3, the core pin 81 is positioned within the ejector sleeve 71, but because the core pin 81 also passes through the ejector plates 66, 67 to which the ejector sleeve 71 is fixed, and is fixed to the mounting plate which is positioned on the opposite side to the movable side mold plate 62 so as to sandwich these ejector plates 66, 67, the ejector sleeve 71 can be operated independently of the core pin 81. This ability to operate the ejector sleeve 71 independently of the core pin 81 is required in order to extract the core pin 81 from the molded product 1 when the molded product 1 is released from the mold.

Because the valve sleeve 56 is designed so that the gate closing section 111 at the front end of the valve sleeve 56 engages with the gate 35 in a freely removable manner, in order to decrease abrasion caused by insertion and removal, it is necessary for the valve sleeve 56 to be in accurate core alignment relative to the gate 35.

In the present embodiment, because the outer peripheral surface 56b on the gate 35 side of the valve sleeve 56 is supported by the valve sleeve support section 47 provided on the material passage 45 in a freely sliding manner, accurate core alignment of the valve sleeve 56 and the gate 35 can be achieved.

On the other hand, the core pin 81 passes through the ejector plate 66, the through hole 85 formed in the ejector member securing plate 68, and the through hole 71 a in the cylindrical ejector sleeve 71 in a freely sliding manner so that the front end thereof protrudes into the product cavity 23, and as such, the molded product 1 can be pushed out by moving the ejector sleeve 71 relative to the core pin 81. The center of the core pin 81 is positioned by this ejector sleeve 71, and the tip of the core pin 81 protrudes into the product cavity 23.

On the other hand, by providing the valve sleeve support section 46 in the material passage 45, on the side of the stationary mold 21 with the gate forming hole 34, and supporting the valve sleeve 56 using this valve sleeve support section 46, the center of the core pin 81, which engages with the inner peripheral surface of the valve sleeve 56, can also be accurately aligned with the gate 35, and consequently precise core alignment of all three of the valve sleeve 56, the core pin 81 and the gate 35 can be achieved. Because the outer peripheral surface of the core pin 35 engages directly into the inner peripheral surface of the hole 56a of the valve sleeve 56, core alignment between the valve sleeve 56 and the core pin 35 is easily achieved.

Because the front end outer peripheral comers 112 of the gate closing section 111 are curved, the gate closing section 111 can be inserted and engaged smoothly with the outer peripheral surface of the gate 35.

Because an insulating layer in the form of the resin insulating layer 122 is formed between the product cavity 23 and the valve main body 43, the insulation characteristics between the product cavity 23 and the band heater 48 which functions as the heating device can be improved.

The present invention is not limited to the embodiments described above, and various other modifications are possible. For example, the shape of the molded product is not limited to that shown in FIG. 4, and the present invention can also be applied to a molded product of any shape which has a hole, such as a gear. Furthermore, the present invention can also be applied in general to injection molding of a thermoplastic molding material, not only the injection molding of thermoplastic resins. In addition, in the embodiment described above, the valve support section comprised three support vanes 101, but the number of support vanes is not limited to three, and there may also be four or more.

### INDUSTRIAL APPLICABILITY

In a method of manufacturing a molded product manufacturing according to the present invention, a core body provided on a second mold engages with the inner peripheral surface of a cylindrical valve body provided on a first mold which has a gate forming hole opening at a position corresponding with a hole in a molded product in a product cavity, thereby forming a cylindrical gate between the inner peripheral surface of the gate forming hole and the outer peripheral surface of the core body, and the gate is opened by moving a valve body which closes this gate, and the molding material is injected into the product cavity via the gate, which is opened in a state where the core body remains engaged with the valve body.

Accordingly, the hole does not become an obstacle, and the product cavity can be filled evenly with the molding material, and furthermore, because the core body is engaged inside the cylindrical valve body at the time of filling, the thickness of the cylindrical gate can be kept stable around the entire periphery, and resists the pressure of the resin, enabling the resin to fill each section of the product cavity 23 even more evenly. Consequently, a high quality molded product with high precision can be obtained.

Furthermore, by closing the gate by using the valve body, the molding material within the product cavity, namely the molded product, and the resin in the material passage ending at the gate are cut off from each other, and consequently after treatment of the gate portion in the molded product is not required.

## Claims

1. A method of manufacturing a molded product with a hole, comprising:
closing a plurality of molds capable of opening and closing with respect to each other to form a product cavity between the molds,
engaging a core body, provided on a mold which opposes a mold with a gate forming hole which opens at a position in a product cavity corresponding to the hole, with an inner peripheral surface of a cylindrical valve body provided on the mold with the gate forming hole, thereby forming a cylindrical gate between the inner peripheral surface of the gate forming hole and an outer peripheral surface of the core body,
opening the gate by moving a valve body which closes the gate in an axial direction, and
injecting a molding material into the product cavity via the gate which is opened in a state in which the core body remains engaged in the valve body.

2. A method of manufacturing a molded product according to claim 1, wherein a material passage which connects to the gate forming hole is provided in the mold with the gate forming hole, and an outer peripheral surface on a gate side of the valve body is supported in a freely sliding manner by a valve body support section provided in the material passage.

3. A valve gate molding apparatus which molds a molded product with a hole. comprising:
a plurality of molds which are capable of opening and closing with respect to each other and which form a product cavity therebetween when closed,
a cylindrical valve body provided on a mold amongst the molds with a gate forming hole which opens at a position corresponding with the hole in the product cavity, which moves in an axial direction of the gate forming hole and engages in a freely removable manner with the gate forming hole, and
a core body provided on a mold which opposes the mold with the gate forming hole, which is constantly engaged with an inner peripheral surface of the cylindrical valve body in a freely sliding manner when the molds are closed, wherein
a cylindrical gate through which a molding material is injected into the product cavity is formed between an inner peripheral surface of the gate forming hole and an outer peripheral surface of the core body.

4. A valve gate molding apparatus according to claim 3, wherein a material passage which links to the gate forming hole is provided in the mold with the gate forming hole, the valve body is positioned within the material passage, and the material passage comprises a valve pin support section which supports a gate side outer peripheral surface of the valve body in a freely sliding manner.

5. A valve gate molding apparatus according to either one of claim 3 and claim 4, wherein;
the mold with the core body comprises a cavity forming member which forms the product cavity, a mounting plate, and an ejector plate provided between the mounting plate and the cavity forming member, wherein an ejector sleeve which pushes a molded product at a periphery of the hole to release the molded product from the mold is fixed to the ejector plate, and the core body is fixed at one end to the mounting plate, and passes through the ejector plate and the ejector sleeve in a freely sliding manner and protrudes into the product cavity.
